# EUROPÄISCHE PATENTANMELDUNG

(11) **EP 0 713 759 A2**
(43) Veröffentlichungstag der Anmeldung: **29.05.1996**
(21) Anmeldenummer: 95108064.7
(22) Anmeldetag: 26.05.1995
(51) Int. Cl.: B29C 51/14, B29C 51/10

(54) **Verfahren zur Herstellung eines kaschierten Warmformteils**

(30) Priorität: 26.11.1994 DE 4441986
(71) Anmelder: ITT Reiss International GmbH, D-88069 Tettnang (DE)
(72) Erfinder: Wissing, Gerhard, D-88085 Langenargen (DE)
(74) Vertreter: Esser, Wolfgang

(57) **Zusammenfassung**

Die Erfindung betrifft ein Verfahren zum Herstellen eines kaschierten Warmformteils bestehend aus einem warmverformbaren, thermoplastischen Kunststoff, Kunststoffgemische oder einer Kunststoffmatix als tragendem Werkstoff des Warmformteils (26) und einem verformbaren Kaschiermaterial (24), wozu vor dem Warmformvorgang in den Raum zwischen Kunststofftafel und einer Tiefziehform (10) eine verformbare Kaschierbahn (24) eingebracht wird, die beim Warmformvorgang mit dem dabei entstehenden Warmformteil verbunden wird. Der Anpressdruck und/oder Temperaturen für eine Verbindung zwischen Kaschierbahn und Kunststofftafel wird durch Druckluftunterstützung erhöht.

## Beschreibung

Die Erfindung betrifft ein Verfahren zum Herstellen eines kaschierten Warmformteils bestehend aus einem warmverformbaren, thermoplastischen Kunststoff, Kunststoffgemische oder einer Kunststoffmatix als tragendem Werkstoff des Warmformteils und einem verformbaren Kaschiermaterial.

Derzeit mögliche und bekannte Verfahren sind unter anderem das nachträgliche Kaschieren eines Trägerteiles unter Verwendung von zusätzlichem Kleberauftrag, das direkte Hinterspritzen im Niederdruckverfahren, das direkte Hinterprägen im Spritzprägeverfahren, das direkte Hinterschäumen im Schäumverfahren und das Thermoformpressen.

Aus dem deutschen Gebrauchsmuster G 92 16 080.8 ist ein Tiefziehteil aus warmverformbaren, thermoplastischen Kunststoff, Kunststoffgemisch oder einer Kunststoffmatix bekannt, das aus einem faserverstärkten Polypropylen oder Polyäthylen oder einem entsprechenden Copolymer besteht, bekannt. Durch die in diesem Gebrauchsmuster beschriebenen Eigenschaften findet dieses Tiefziehteil breite Anwendungsgebiete, auch dort, wo neben der technischen Funktion auch optische und dekorative Anforderungen und/oder geräuschdämmende Anforderungen bestehen, die ohne zusätzliche Oberflächenbehandlung nicht zu erhüllen sind.

Aus der deutschen Patentanmeldung DE 42 11 077 ist eine Verfahren zur Herstellung eines Formteils mit strukturierter Oberfläche bekannt, bei dem in eine Tiefziehform zunächst ein Dekorträger eingelegt, eine Kunststoffplatte zum Ziehen eines Formteil eingebracht, auf Verformungstemperatur erwärmt und danach mittels Unterdruck im Bereich der Tiefziehform in die Form gezogen wird. Dabei soll die dem Kunststofformteil zugekehrte Seite zumindest teilweise materialschlüssig in der Oberflächenschicht des Kunststofformteils angebunden werden.

Nachteilig bei diesem Verfahren ist, daß diese materialschlüssige Verbindung nicht in allen Anwendungsfällen in ausreichendem Maße erreicht werden kann. Insbesondere bei größeren Verformungen, wie tiefen Wannen, und schwieriger Formteilgeometrie, wie Hinterschnitte, wird die geforderte Ausformung und/oder Verbindung nicht zuverlässig erreicht. Weiterhin ist das bekannte Verfahren bei Dekormaterialien mit geringer oder keiner Luftdurchlässigkeit nicht zuverlässig anwendbar, da unkontrollierbare Lufteinschlüsse zwischen Kunststofftafel und Dekormaterial verbleiben können.

Es ist Aufgabe der Erfindung, ein kostengünstiges Verfahren zur einfachen Herstellung von wenigstens einseitig kaschierten Warmformteilen aus warmverformbarem, thermoplastischen Kunststoffmaterial anzugeben bei dem eine zuverlässige Verbindung zwischen der verformten Kunststofftafel und der Kaschierbahn erreicht wird.

Diese Aufgabe löst die Erfindung dadurch, daß beim Warmformvorgang der Anpressdruck durch zusätzliche Druckluftunterstützung erhöht wird.

Durch die zusätzliche Druckluftunterstützung wird eine bessere Abformgenauigkeit des Verbundes von Kunststofftafel und Kaschierbahn erreicht, die Hinterschnitte und 90°-Umbug ermöglicht, da der Verbund mit erheblich höheren Kräften in die Tiefziehform gepreßt wird. Dies geht einher mit einer durch diese höheren Kräfte verursachten zuverlässigeren Verankerung der Kaschierbahn in der Oberfläche der Kunststofftafel. Weiterhin können höhere Streck- und Dehnkräfte auf das Dekormaterial ausgeübt werden, wodurch ebenfalls die Abformgenauigkeit verbessert wird.

Auch für Kaschierbahnen mit geringer oder keiner Luftdurchlässigkeit wird die Zuverlässigkeit der materialschlüssigen Verbindung erhöht.

Für Kaschiermaterialien mit hoher Durchlässigkeit, wie z.B. dünne Textilien, bei denen nur eine kontrollierte Eindringtiefe in die Oberfläche der Kunststofftafel auftreten darf, ist das erfindungsgemäße Verfahren, insbesondere bei komplexer Formgebung, besonders geeignet. Das Verfahren erlaubt es, abhängig von den verwendeten Materialien, die für die Abformung, insbesondere komplexer Formbereiche, und die Eindringtiefe ursächlichen Parameter Anpressdruck und Temperatur der Kunststofftafel in einem erweiterten Bereich für den Anpressdruck zu variieren und zu optimieren. So kann bei gleichbleibender Abformbarkeit durch geringere Temperatur verbunden mit höherem Anpressdruck, das durch die temperaturabhängige Fließfähigkeit verursachte Eindringen verringert werden.

Zur Zeit vorhandene Geräte lassen eine Druckluftunterstützung von bis zu 16 bar zu, wobei vorzugsweise, unter anderem von der Größe des Formteils und den dadurch auftretenden Kräften abhängig, eine Druckluftunterstützung zwischen 0,5 und 10 bar Anwendung findet.
Das Verfahren ist sowohl für die vollständige, flächendeckende Kaschierung von Warmformteilen als auch für die Kaschierung von Teilen der Oberfläche geeignet.

Durch die schonende Aufbringung der Kaschierbahn beim Warmformen im Druckbereich von 0,5 bar bis max. ca. 10 bar (Überdruck), werden ausgezeichnete Qualitätsmerkmale, eine gute Erhaltung des textilen weichen Charakters und eine gute Farbkonstanz des Dekormateriales erreicht.

Die vorgenannten Möglichkeiten können in einer Weiterbildung der Erfindung dadurch unterstützt werden, daß die Kaschierbahn zumindest einseitig vor dem Tiefziehvorgang soweit vorgewärmt wird, daß eine deutliche Herabsetzung des E-Moduls auftritt, d.h. eine deutlich verbesserte Streck- und Dehnfähigkeit, jedoch keine anderen wesentlichen Materialeigenschaften verändert werden. D.h. die Erwärmung soll insbesondere bei teilkristallinen Kunststoffen unterhalb des Kristalit-Schmelzpunktes (bei Polypropylen < 130-140°C bei Polyester <220°C) bleiben, um auch noch eine ausreichende Farbkonstanz zu gewährleisten.

Durch diese dem Warmformvorgang vorausgehende zumindest einseitige Erwärmung der Kaschierbahn, kann erreicht werden, daß die Kaschierbahn überhaupt erst verformbar wird, bzw. deren Verformbarkeit verbessert wird, sodaß die Kaschierbahn ohne Faltenbildung oder Rissbildung an die Tiefziehform anschmiegt.

Das Verfahren eignet sich insbesondere für das Tiefziehen mit Positiv- oder Negativform, gegebenenfalls mit der bei diesem Verfahren bekannten Unterstützung der Ausformung durch Oberstempel.

Besonders vorteilhaft ist das erfindungsgemäße Verfahren, wenn für Kunststofftafel und Kaschierbahn solche Materialkombinationen ausgewählt werden, die sich durch den beim Warmformvorgang, insbesondere Tiefziehvorgang selbst auftretenden Anpreßdruck und/oder die dabei auftretenden Temperaturen selbst innig verbinden. Damit ist der Auftrag und die Verwendung von Kebematerialien überflüssig, was sowohl den Herstellungsprozeß vereinfacht, als auch das spätere Recycling vereinfacht.

Soll mit der Kaschierbahn eine Oberfläche hergestellt werden, bei der eine solche Materialkombination nicht möglich ist, kann auch eine mehrschichtige oder mehrlagige Kaschierbahn gewählt werden, auf deren der Kunststofftafel zugewandte Seite eine Materialschicht aufgebracht ist oder wird , die sich beim Tiefziehen mit der Kunststofftafel verbindet. Damit bleibt der für den Herstellungprozess beschriebene Vorteil erhalten und die Verbindung der Materialien innerhalb der mehrschichtigen Kaschierbahn bei kann durch andere Prozesse bei deren Herstellung gelöst werden.

Unter einer mehrlagigen Kaschierbahn wird in diesem Zusammenhang die Verwendung-einer aus einem dritten Material bestehenden zusätzlichen Zwischenbahn verstanden, die sich dann besonders anbietet, wenn die Materialien der Kunststofftafel und der Kaschierbahn keine oder keine ausreichend zuverlässige materialschlüssige Verbindung miteinander eingehen, aber beide Materialien eine solche Verbindung mit dem Material der Zwischenbahn eingehen.

Unabhängig von dieser Anwendung einer Zwischenfolie kann deren Verwendung auch bei einer weitmaschigen Kaschierbahn angebracht sein, um ein "Durchschlagen" des Materials der Kunststofftafel durch die Maschen der Kaschierfolie zu verhindern.

Ist keine der oben genannten Möglichkeiten solcher Kombinationen aus Kosten- oder technischen Gründen möglich, so kann die Kaschierbahn zur Kunststofftafel hin mit einem Kleber versehen werden, um eine Verbindung beim Warmformen, insbesondere Tiefziehvorgang zu erreichen.

Als Materialien für die Kaschierbahn eignen sich dabei insbesondere Folien, Nadelvlies und Textilien aller Art, insbesondere aus Baumwolle, Polyamid, Polyester oder Polypropylen, weiter TPE- oder PVC-Schaumfolien und vernetzte Schaumfolien auf Basis Polyurethan, Polyethylen oder Polypropylen. Desweiteren eignen sich Partikelschäume, z.B. Polypropylenpartikelschaum.

Der Aufbau der Kaschiermaterialien wie Gewebe, Gewirke, Gestricke, Flächengewicht, Dehnfähigkeit, etc. ist abhängig von den gewünschten Radien und der beim Tiefziehen auftretenden Materialstreckung auszuwählen.

Als Trägermaterial für die Kaschierung eignen sich besonders Kunststofftafeln, die eine hohe Steifigkeit (hoher E-Modul) aufweisen, beispielsweise Kunststofftafeln aus glasfaser-, naturfaser- oder talkumverstärktem Polypropylen oder aus glasfaserverstärktem Syrol-Acrylnitril (SAN).

Besonders vorteilhaft kann die Kaschierbahn über einen separaten Spannrahmen oder endlos über ein Rollensystem in den Raum zwischen Form und Kunsstofftafel zugeführt werden.

Um die Lage der Kaschierbahn zum Formteil zu bestimmen und ein unkontrolliertes "Einziehen" in die Form zu verhindern, erfolgt eine mechanische Fixierung der Kaschierbahn zur Form bzw. zum Spannrahmen, wobei die Fixierelemente die beispielsweise als ein festes oder beweglich gelagertes Nadelsystem ausgebildet sein können, die eine Nachgiebigkeit in Richtung der beim Warmformen auftretenden Dehnungen aufweisen können um zu große Materialstreckungen der Kaschierbahn bei Formvorgang zu vermeiden.

Weiter kann die Kaschierbahn so eingebracht werden, daß sie bei einer Positivform die Form bereits ganz oder teilweise umschließt oder bei einer Negativform ganz oder teilweise in den Formraum hineinragt.

Bei einer Kaschierung von Teilflächen sind auf bzw. in der Form selbst entsprechende Fixiereinrichtungen vorzusehen, die beim Herstellungsprozeß ein paßgerechter Auf- bzw. Einlegen ermöglichen und während des Warmformvorganges für eine entsprechende Fixierung der Ränder sorgen, oder die Fixierung kann durch einen separaten Rahmen erfolgen, der beim Tiefziehen von der Kunsstofftafel mit umzogen wird und im fertigen Teil verbleibt.

In einer besonderen Weiterbildung der Erfindung wird zur Herstellung beidseitig kaschierter Formteile eine Kunststofftafel verwendet, die bereits eine, auf der der Form angewandten Seite liegende Kaschierung aufweist. Dies kann insbesondere dann von Vorteil sein, wenn die spätere Verwendung des Warmformteils sowohl eine geräuschdämmende Wirkung, die durch eine Kaschierung mit einem Dämmaterial auf einer Seite erreicht werden kann, als auch ein dekoratives Aussehen, das durch eine Kaschierung auf der anderen Seite erreicht werden kann, verlangt.

Im Hinblick auf die Recyclingfähigkeit ist es besonders vorteilhaft, für Trägermaterial (Kunsstofftafel) und Kaschierbahn im wesentlichen gleiche Kunststoffmaterialien insbesondere Polypropylen zu verwenden. Dadurch ist eine Trennung von Träger- und Kaschiermaterial bei der Wiederaufarbeitung nicht erforderlich.

Ein Ausführungsbeispiel für die Durchführung der Erfindung wird anhand der Zeichnungen näher erläutert. Dabei zeigen die Figuren 1 bis 4 aufeinanderfolgende Phasen des Verfahrens in einem stark vereinfachten Querschnitt von Form und tiefzuziehendem Material. Wobei in
- Fig. 1: die Phase der Aufheizung einer Kunststofftafel,
- Fig. 2: der Zustand vor dem Tiefziehen,
- Fig. 3: der Zustand nach Abschluß der Formphase,
- Fig. 4: die Zuführung der Kaschierbahn von einer Rolle,
- Fig. 5: eine Varianten der Fixierung der Kaschierbahn mittels eines Spannrahmens, und
- Fig. 6a und 6b: einen vergrößerten Teilschnitt durch den Verbund zeigen.

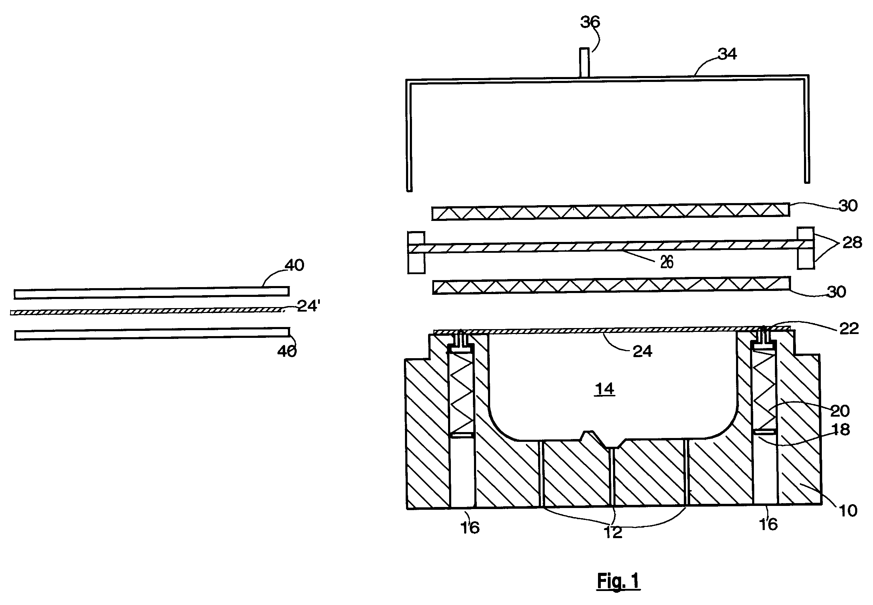

Fig. 1 zeigt einen stark vereinfachten Querschnitt durch eine Negativ-Form 10 mit Saugkanälen 12 und einem wannenförmigen Freiraum 14. Eine in einen Spannrahmen 28 eingespannte Kunststofftafel 26, beispielsweise aus glasfaserverstärktem Polypropylen, wird zwischen zwei Heizelementen 30 auf eine Verformungstemperatur oberhalb des Kristalit-Schmelzpunktes von ca. 160 bis 220°C erwärmt.

Oberhalb der Heizelemente liegt eine Druckglocke 34 mit einem Druckluftanschluß 36.

Eine erwärmte Kaschierbahn 24 beispielsweise aus einem Polypropylenmaterial, ist bereits über den wannenförmigen Freiraum 14 gelegt und wird über symmetrisch zum Freiraum liegende Nadeln 22 fixiert. Diese Nadeln 22 sind über Federn 20, die sich auf Scheiben 18 in Bohrungen 16 der Negativ-Form 10 abstützen nachgiebig gelagert.

Seitlich dieser Anordnung ist eine Vorwärmeinrichtung, bestehend aus Heizelementen 40, dargestellt, zwischen denen eine Kaschierbahn 24' erwärmt wird, die für das nächste Warmformteil bestimmt ist.

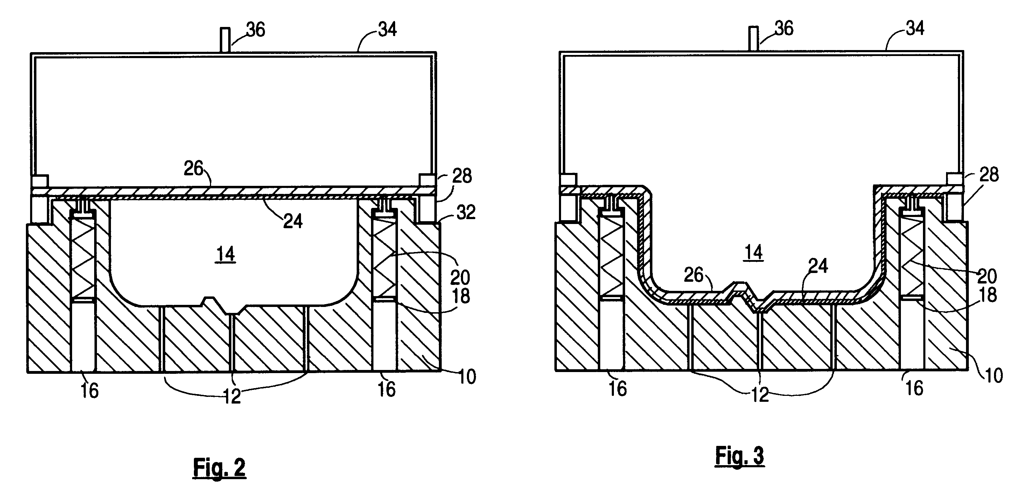

Ist die Verformungstemperatur der Kunsstofftafel 26 erreicht, werden die zwischen Kunststofftafel 26, Form 10 und Druckglocke 34 befindlichen Heizelemente 30 entfernt und anschließend Spannrahmen 28 mit der Kunststofftafel 26, Form 10 und Druckglocke 34 zueinander hin bewegt und angepresst (Fig.2). In der Regel wird die Form 10 zum Spannrahmen 28 hin bewegt. Durch die Anpressung wird der Spannrahmen 28 gegen eine Schulter 32 der Form 10 gedrückt, der Rand der Druckglocke wird auf den oberen Abschluß des Spannrahmens gedrückt, um einen luftdichten Abschluß zu erreichen. Dieser kann durch jeweils eine zwischenliegende, nicht dargestellte Dichtung verbessert werden.

Nun wird der wannenförmige Freiraum 14 durch die Saugkanäle 12 evakuiert. Synchronisiert mit der Evakuierung des Freiraums 14 wird über den Druckluftanschluß 36 Druckluft zugeführt und Kunsstofftafel 26 und Kaschierbahn 24 zusätzlich in die Form gepreßt. Kaschierbahn 24 und Kunsstofftafel 26 werden in die Form 10 gezogen und gepreßt, bis der in Fig. 3 gezeigte Zustand erreicht wird, in dem Kaschierbahn 24 und verformte Kunststofftafel 26 innig an der Innenwand der Form 10 anliegen. Bei diesem Tiefziehvorgang verbinden sich die Kaschierbahn 24 und die verformte Kunststofftafel 26 materialschlüssig.

Nach dem üblichen Abkühlvorgang kann das so kaschierte Formteil entnommen werden und die übliche Bearbeitung der Ränder o. ä. erfolgen.

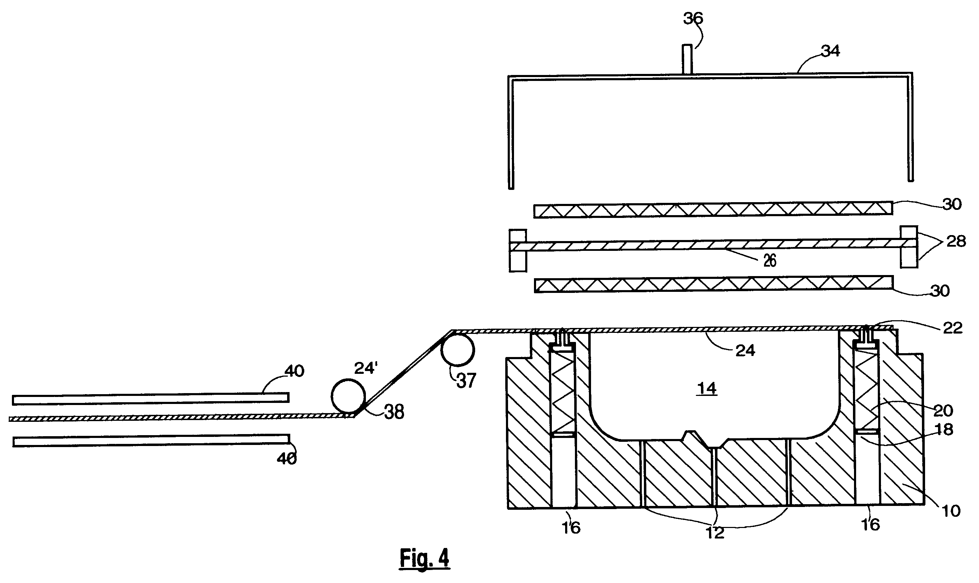

Fig. 4 zeigt eine mögliche Ausführungsform bei der die Zuführung der Kaschierbahn 24 über ein Rollensystem 37,38 von einer nicht dargestellten Rolle erfolgt. Wie aus der Fig. 4 zu erkennen ist, wird zur Fixierung vor dem Warmformvorgang das in Fig. 1 beschriebene Nadelsystem verwendet.

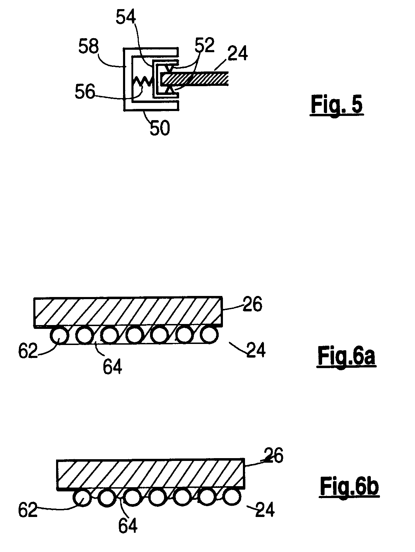

Fig. 5 zeigt eine Varianten der Fixierung der Kaschierbahn, bei der die Kaschierbahn nicht durch ein Nadelsystem auf der Form fixiert wird, sondern in einem separaten Spannrahmen 50 gehalten wird
In diesem Spannrahmen 50 wird die Kaschierbahn 24 zwischen Nadeln 52 eingeklemmt, deren U-förmiger, im Spannrahmen 50 frei schwebender Träger 54 durch eine Feder 56 gegen eine Seitenwand 58 des Spannrahmens 50 gelagert ist. Durch die Federkräfte der Feder 56 wird ein kontrolliertes Nachgeben auf die beim Warmformvorgang auftretenden Zugkräfte ermöglicht und damit ein kontrolliertes "Einziehen" in die Form ermöglicht.

Fig. 6a zeigt einen vergrößerten Teilschnitt durch den Verbund, bei dem deutlich wird, daß das Material der Kunsstoffplatte 26 sehr weit in die Lücken 64 zwischen den Maschen 62 der Kaschierbahn 24 eingedrungen ist, und damit die Struktur der Kaschierbahn teilweise überdeckt.

Dies kann durch die Verwendung einer niedrigeren Temperatur der Kunsstofftafel bei gleichzeitig höherem Druck auf ein Maß reduziert werden wie es in Fig. 6b dargestellt ist.

## Patentansprüche

1. Verfahren zum Herstellen eines Warmformteils bestehend aus einer Kunststofftafel aus einem warmverformbaren, thermoplastischen Kunststoff, Kunststoffgemisch oder einer Kunststoffmatrix, bei dem vor dem Warmformvorgang in den Raum zwischen der Kunststofftafel und einer Tiefziehform eine verformbare Kaschierbahn eingebracht wird, die beim Warmformvorgang mit der Oberfläche der Kunsstofftafel verbunden wird, dadurch gekennzeichnet, daß der Anpressdruck beim Warmformvorgang durch zusätzliche Druckluftunterstützung erhöht wird.

2. Verfahren nach Anspruch 1, dadurch gekennzeichnet, daß die Kaschierbahn (24)-mindestens einseitig vor dem Tiefziehvorgang soweit vorgewärmt wird, daß eine deutliche Herabsetzung des E-Moduls auftritt, jedoch keine anderen wesentlichen Materialeigenschaften verändert werden.

3. Verfahren nach Anspruch 1 oder 2 dadurch gekennzeichnet, daß das kaschierte Warmformteil durch Tiefziehen hergestellt wird.

4. Verfahren nach Anspruch 1, 2 oder 3, dadurch gekennzeichnet, daß für Kunststofftafel (26) und Kaschierbahn (24) solche Materialkombinationen ausgewählt werden, die sich durch den beim druckluftunterstützen Tiefziehvorgang selbst auftretenden Anpreßdruck und/oder die dabei auftretenden Temperaturen selbst innig verbinden.

5. Verfahren nach wenigstens einem der vorherigen Ansprüche dadurch gekennzeichnet, daß eine mehrschichtige oder mehrlagige Kaschierbahn (24) verwendet wird.

6. Verfahren nach Anspruch 1,2,3 oder 5, dadurch gekennzeichnet, daß die Kaschierbahn (24) zur Kunststofftafel (26) hin mit einem Kleber versehen wird.

7. Verfahren nach einem der vorherigen Ansprüche, dadurch gekennzeichnet, daß als aufzukaschierendes Material Folien, Nadelvlies und Textilien aller Art, insbesondere aus Baumwolle, Polyamid, Polyester oder Polypropylen, Polyethylen oder PVC-Schaumfolien oder Schaumfolien auf Basis Polyurethan (PUR), Polyethylen (PE) oder Polypropylen (PP) und Partikelschäume, z. B. auf PP-Basis verwendet werden.

8. Verfahren nach einem der vorherigen Ansprüche, dadurch gekennzeichnet, daß eine Kunststofftafel (26) aus glasfaser oder talkumverstärktem Polypropylen verwendet wird.

9. Verfahren nach wenigstens einem der Ansprüche 1 bis 7, dadurch gekennzeichnet, daß eine Kunststofftafel aus glasfaserverstärktem Syrol-Acrylnitril (SAN) verwendet wird.

10. Verfahren nach wenigstens einem der vorherigen Ansprüche, dadurch gekennzeichnet, daß die Kaschierbahn (24) über einen separaten Spannrahmen (50) oder endlos über ein Rollensystem (37,38) zugeführt wird.

11. Verfahren nach wenigstens einem der vorherigen Ansprüche, dadurch gekennzeichnet, daß die Kaschierbahn (24) auf der Form bzw. zum Spannrahmen mechanisch fixiert wird, wobei die Fixierelemente auch eine Nachgiebigkeit in Richtung der beim Warmformen auftretenden Dehnungen (Zugkräfte) aufweisen können.

12. Verfahren nach einem der vorherigen Ansprüche, dadurch gekennzeichnet daß eine Kunststofftafel (26) verwendet wird, die bereits auf der formabgewandten Seite eine Kaschierung aufweist.

13. Verfahren nach einem der vorherigen Ansprüche, dadurch gekennzeichnet, daß für die kleberfreie Verbindung, eine im wesentlichen aus Polypropylen bestehende Kaschierbahn und eine im wesentlichen aus Polypropylen bestehende Kunststofftafeln ggf. einschließlich ihrer Vorkaschierung verwendet wird.

14. Verfahren nach einem der vorherigen Ansprüche, dadurch gekennzeichnet, daß für eine partielle Kaschierung eines Warmformteils ein separater Rahmen für die Kaschierbahnfixierung verwendet wird, der mit dem darauf befestigten Kaschiermaterial in die Tiefziehform eingelegt wird und formschlüssig von der Kunsstofftafel beim Tiefziehvorgang umzogen wird.
